# EUROPEAN PATENT APPLICATION

(11) **EP 3 508 876 A1**
(43) Date of publication of application: **10.07.2019**
(21) Application number: 17845455.9
(22) Date of filing: 30.08.2017
(51) Int. Cl.: G01S 13/88

(54) **RADAR DEVICE AND METHOD FOR SIMULTANEOUSLY DETECTING SHIP TARGET AND OIL SPILL ON WATER SURFACE**

(30) Priority: 31.08.2016 CN 201610793114; 31.08.2016 CN 201621025675 U
(71) Applicant: Qingdao Sunic-Ocean Marine Technology & Service Co., Ltd., Shandong 266071 (CN)
(72) Inventor: LI, Guobin, Qingdao Shandong 266071 (CN); WANG, Shike, Qingdao Shandong 266071 (CN); ZHAO, Peixue, Qingdao Shandong 266071 (CN); SHEN, Yijun, Qingdao Shandong 266071 (CN); MOU, Xuedong, Qingdao Shandong 266071 (CN); WANG, Fuzhai, Qingdao Shandong 266071 (CN); CHEN, Bing, Qingdao Shandong 266071 (CN); WANG, Wei, Qingdao Shandong 266071 (CN)
(74) Representative: Inal, Aysegul Seda
(86) International application number: PCT/CN2017/099737
(87) International publication number: WO 2018/041153

(57) **Abstract**

A radar device for simultaneously detecting vessel targets and oil spills on water surface, includes: an antenna (1), a duplexer (2), a first transceiver unit, a second transceiver unit, a first signal distributor (5), a second signal distributor (8), a vessel traffic service radar processor (6), and an oil spill radar processor (7). An antenna end of the duplexer (2) is connected to the antenna (1). A first frequency receiving/transmitting channel and a second frequency receiving/transmitting channel of the duplexer (2) are respectively connected to the first transceiver unit and the second transceiver unit. A first receiving unit (3) and a second receiving unit (10) are respectively connected to the first signal distributor (5) and the second signal distributor (8). The first signal distributor (5) and the second signal distributor (8) are cross-connected or respectively connected to the vessel traffic service radar processor (6) and the oil spill radar processor (7). The two transceiver units are structurally symmetrical and can simultaneously transmit radar waves, thereby simultaneously achieving the vessel target detection and the oil spill detection.

## Description

### Technical Field

The present invention belongs to the field of radar technology, and particularly relates to a radar device for simultaneously detecting vessel targets and oil spills on water surface.

### Background

With the rapid development of the global economy, the maritime shipping industry also developed rapidly, which inevitably aggravated the pollution to the marine environment, especially due to oil-spillage. Serious oil-spill pollution causes damage to the socio-economic development and people's life, and destroys the marine ecosystem. Common oil spill accidents include operational oil spills and accidental oil spills. Operational oil spills include oil spills caused by crew members' non-compliance with relevant regulations, such as illegal discharge of bilge water, oil fouling, waste engine oil, etc., or caused by crew members' mistakes during loading and unloading of oil, such as opening of the valve by mistake or detachment of flange joints, overflowing of oil tank or rupture of oil pipeline during oiling, etc. Accidental oil spills include sudden oil spill accident caused by large-scale leakage of cargo oil or fuel due to vessel accidents such as collisions, stranding, reefing, firing and explosions, etc.

The spilled oil flowing into the ocean will cause serious damages to the marine ecological environment and marine biological resources. The damages to the marine ecology, beach mariculture, salt field production, and beach tourism areas cannot be repaired. If people accidentally eat seafood contaminated by the spilled oil, people's health will be adversely affected.

How to notice the maritime oil-spill accident as soon as it happens and take reasonable emergency measures immediately to minimize the damages to the marine ecosystem, is an urgent problem to be solved.

Marine oil-spill pollution gets more and more attention in the international community. Most of the existing vessel traffic service radars are redundantly configured with dual transceivers. One of the two transceivers is a master transceiver, and the other one is a standby transceiver. The two transceivers do not transmit radar wave at the same time, so they can only be used for vessel traffic monitoring and management, without the function of oil spill monitoring.

### Summary

The objective of the present invention is to overcome the drawbacks of the prior art, and to design a radar processing device and method capable of simultaneously achieve the detection of vessel target and oil spills.

In order to achieve the above objective, the technical solutions adopted by the present invention are as follows.

A radar device for simultaneously detecting vessel targets and oil spills on water surface, includes an antenna, a duplexer, a first transceiver unit, a second transceiver unit, a first signal distributor, a second signal distributor, a vessel traffic service radar processor, and an oil spill radar processor. An antenna end of the duplexer is connected to the antenna. A first frequency receiving/transmitting channel and a second frequency receiving/transmitting channel of the duplexer are respectively connected to the first transceiver unit and the second transceiver unit. The first transceiver unit and the second transceiver unit are respectively connected to the first signal distributor and the second signal distributor. The first signal distributor and the second signal distributor are cross-connected or respectively connected to the vessel traffic service radar processor and the oil spill radar processor. The first transceiver unit has a transmitting frequency in the range of 9100-9300 MHz, and a receiving frequency of 9170 MHz. The second transceiver unit has a transmitting frequency of 9438 MHz and a receiving frequency of 9438 MHz. The transmitting units are magnetrons, and the antenna is a vertically polarized antenna.

A method for detecting vessel targets and oil spills on water surface using the radar signal processing device, includes the following steps:
step 1: starting the radar device;
step 2: transmitting a signal with a frequency ranging 9100-9300 MHz through a first magnetron, and transmitting a signal with a frequency of 9438 MHz through a second magnetron; and feeding the signals transmitted by the first magnetron and the second magnetron to the vertically polarized antenna through the duplexer to transmit the signals to a monitoring area;
step 3: sending the feedback signals received by the vertically polarized antenna to first receiving unit and the second receiving unit, respectively, through the duplexer; and
step 4: processing the signals by the first transceiver unit and the second transceiver unit and transmitting the processed signals to the signal distributors. An output signal of the first signal distributor is input to the vessel traffic service radar processor or the oil spill radar processor. The output signal of the second signal distributor is input to the oil spill radar processor or the vessel traffic service radar processor. The vessel traffic service radar processor determines the position and navigational status of the vessel, and the oil spill radar processor detects spilled oil in a detection area.

The present invention has the following advantages.

The two transceiver units are structurally symmetrical, and can simultaneously transmit radar waves. By presetting parameters, one of the transceiver units can be designated for detecting vessel targets and the other one can be designated for detecting oil spills, which can simultaneously achieve the vessel target detection and the oil spill detection. Thus, the oil spills can be noticed rapidly and the warning signals can be issued in time, thereby setting aside the oil spill rescue time and reducing the loss caused by oil spill accidents.

### Brief Description of the Drawings

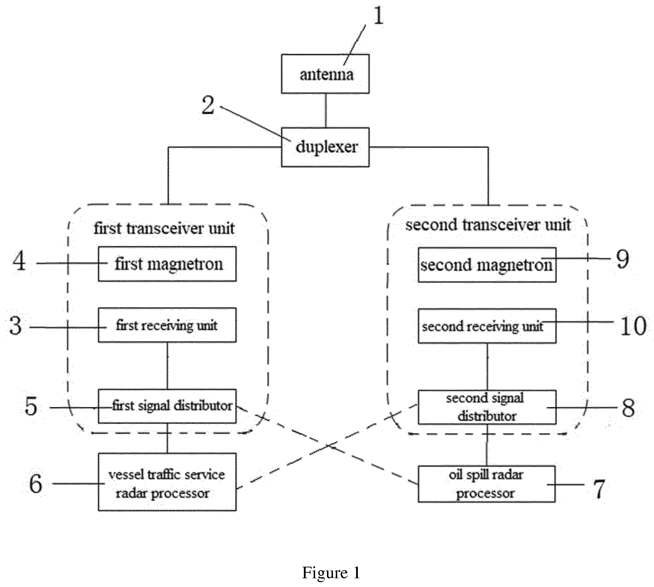

Figure 1 is a structural diagram of the present invention.

As shown in Figure 1: 1 antenna; 2 duplexer; 3 first receiving unit; 4 first magnetron; 5 first signal distributor; 6 vessel traffic service radar processor; 7 oil spill radar processor; 8 second signal distributor; 9 second magnetron; and 10 second receiving unit.

### Detailed Description of the Embodiments

The present invention will be described in detail through embodiments with reference to the drawings hereinafter.

A radar device for simultaneously detecting vessel targets and oil spills on water surface, includes antenna 1, duplexer 2, first transceiver unit, second transceiver unit, first signal distributor 5, second signal distributor 8, vessel traffic service radar processor 6, and oil spill radar processor 7. An antenna end of the duplexer 2 is connected to the antenna 1. A first frequency receiving/transmitting channel and a second frequency receiving/transmitting channel of the duplexer 2 are respectively connected to the first transceiver unit and the second transceiver unit. The first transceiver unit includes a first receiving unit 3 and a first transmitting unit. The second transceiver unit includes a second receiving unit 10 and a second transmitting unit. The first receiving unit 3 and the second receiving unit 10 are respectively connected to the first signal distributor 5 and the second signal distributor 8. The first signal distributor 5 and the second signal distributor 8 are cross-connected or respectively connected to the vessel traffic service radar processor 6 and the oil spill radar processor 7. The first transceiver unit has a transmitting frequency in the range of 9100-9300 MHz, and a receiving frequency of 9170 MHz. The second transceiver unit has a transmitting frequency of 9438 MHz and a receiving frequency of 9438 MHz. The transmitting units are magnetrons, and the antenna 1 is a vertically polarized antenna 1.

A method for detecting vessel targets and oil spills on water surface using the radar signal processing device, includes the following steps:
step 1: starting the radar device;
step 2: transmitting a signal with a frequency ranging 9100-9300 MHz through a first magnetron 4, and transmitting a signal with a frequency of 9438 MHz through a second magnetron 9; and feeding the signals transmitted by the first magnetron 4 and the second magnetron 9 to the antenna 1 through the duplexer 2 to transmit the signals to a monitoring area;
step 3: sending the feedback signals received by the antenna 1 to a first receiving unit 3 and a second receiving unit 10, respectively, through the duplexer 2; and
step 4: processing the signals by the first transceiver unit and the second transceiver unit and transmitting the processed signals to the signal distributors. An output signal of the first signal distributor 5 is input to the vessel traffic service radar processor 6 or the oil spill radar processor 7. The output signal of the second signal distributor 8 is input to the oil spill radar processor 7 or the vessel traffic service radar processor 6. The vessel traffic service radar processor 6 determines the position and navigational status of the vessel, and the oil spill radar processor 7 detects spilled oil in a detection area.

## Claims

1. A radar device for simultaneously detecting vessel targets and oil spills on water surface, **characterized in that** the radar device comprises: an antenna (1), a duplexer (2), a first transceiver unit, a second transceiver unit, a first signal distributor (5), a second signal distributor (8), a vessel traffic service radar processor (6), and an oil spill radar processor (7); wherein an antenna end of the duplexer (2) is connected to the antenna (1); a first frequency receiving/transmitting channel and a second frequency receiving/transmitting channel of the duplexer (2) are respectively connected to the first transceiver unit and the second transceiver unit; a first receiving unit (3) and a second receiving unit (10) are respectively connected to the first signal distributor (5) and the second signal distributor (8); and the first signal distributor (5) and the second signal distributor (8) are cross-connected or respectively connected to the vessel traffic service radar processor (6) and the oil spill radar processor (7); the first transceiver unit has a transmitting frequency in the range of 9100-9300 MHz, and a receiving frequency of 9170 MHz; the second transceiver unit has a transmitting frequency of 9438 MHz and a receiving frequency of 9438 MHz; the transmitting units are magnetrons; and the antenna (1) is a vertically polarized antenna.

2. A method for detecting vessel targets and oil spills on water surface using the radar signal processing device of claim 1, **characterized in that** the method comprises the following steps:
step 1: starting the radar device;
step 2: transmitting a signal with a frequency ranging 9100-9300 MHz through a first magnetron (4), and transmitting a signal with a frequency of 9438 MHz through a second magnetron (9); and feeding the signals transmitted by the first magnetron (4) and the second magnetron (9) to the antenna (1) through the duplexer (2) to transmit the signals to a monitoring area;
step 3: sending the feedback signals received by the antenna (1) to a first receiving unit (3) and a second receiving unit (10), respectively, through the duplexer (2); and
step 4: processing the signals by the first receiving unit (3) and the second receiving unit (10) and transmitting the processed signals to the signal distributors, wherein an output signal of the first signal distributor (5) is input to the vessel traffic service radar processor (6) or the oil spill radar processor (7); an output signal of the second signal distributor (8) is input to the oil spill radar processor (7) or the vessel traffic service radar processor (6); the vessel traffic service radar processor (6) determines the position and navigational status of the vessel, and the oil spill radar processor (7) detects spilled oil in a detection area.
